# EUROPEAN PATENT APPLICATION

(11) **EP 2 378 467 A1**
(43) Date of publication of application: **19.10.2011**
(21) Application number: 10186067.4
(22) Date of filing: 01.10.2010
(51) Int. Cl.: G06N 5/00

(54) **Question-answer service system and method based on RDF search**

(30) Priority: 16.04.2010 KR 20100035391
(71) Applicant: Korea Institute of Science & Technology Information, Daejeon 305-333 (KR)
(72) Inventor: Jung, Han Min, Daejeon 305-333 (KR); Kim, Pyung, Daejeon 305-150 (KR); Lee, Seung Woo, Daejeon 305-333 (KR)
(74) Representative: Collin, Jérôme

(57) **Abstract**

The present invention relates to question-answer service system and method based on RDF search that can provide question-answer service for an object O having the same predicate P and subject S or a subject S having the same predicate P and object O, on the basis of an RDF network that is formed by extracting a subject S, a predicate P, and an object O, which are units forming an RDF model from a text document including nonstructural statement not having the structural form, and identifying the entity, depending on whether it is semantically same entity among the each entities.

The question-answer service method based on RDF search according to the present invention, include: (a) extracting a subject, a predicate, and an object from a text document composed of the unstructured sentences not having the structured format; (b) creating RDF models composed of the extracted one subject, one predicate, and one object; (c) determining whether there is semantic collision by comparing the RDF models; (d) receiving a question including the subject S, the predicate P, or the object O from a user and being requested to search, on the basis of the constructed RDF network; (e) creating a question for search by interpreting the input question; (f) searching an RDF model matching with the question for search through the RDF network; and (g) providing a subject S, a predicate P, or an object O, which corresponds to an answer for the question from the searched RDF model.

## Description

### [Technical Field]

The present invention relates to system and method providing question-answer service by performing search on the basis of an RDF (Resource Description Framework) network, in more detail, question-answer service system and method based on RDF search that can provide question-answer service for an object (hereafter, indicated by 'O') having the same predicate (hereafter, indicated by 'P') and subject (hereafter, indicated by 'S') or a subject S having the same predicate P and object O, on the basis of an RDF network that is formed by extracting a subject S, a predicate P, and an object O, which are units forming an RDF model from a text document including nonstructural statement not having the structural form, and identifying the entity, depending on whether it is semantically same entity among the each entities.

### [Background Art]

In general, a thesaurus refers to the database being compiled the terms such as the synonym, the antonym, the including relationship, and the like with various terms, such that the computer can recognize the meaning of the Web contents.

An ontology in the information technology refers to the working model of the interaction and the entity in the any specific area of the knowledge such as an electronic commerce. In other words, the ontology is the conceptualization the knowledge in the specific domain and specification of the same, and may be mentioned as the network or graph having the relations of the concepts being used in the domain.

The study of the ontology is now researched and developed, regarding the natural language processing, and a method for semiautomatically establishing the ontology for processing the natural language from the existing various language resource has been mainly studied.

Further, the Korean noun meaning class structure was automatically established targeting one hundred thousand nouns in 1998 at NLP Research Institute of Ulsan University through the method for deciding the basic data for acquiring knowledge for establishing large scale of ontology, and establishing various knowledge information in a Korean language dictionary and an encyclopedia, the Korean Semantic Network (KSN) have been established since 2002, and the ontology using the Korean language dictionary and the encyclopedia is now established.

However, there is a problem that the system expansion or the access to the ontology being already configured in the existing application is not easy because the form of expression about the ontology different every the system. Further, there is a problem that the ontology describing the relationship between the product data being stored in the repository is not used. Since the above-mentioned ontology includes the design intention as well as the configuration of the product, so it is essential to the use of the intelligent product data.

Meanwhile, the Resource Description Framework (hereinafter, referred to as 'RDF') is the standard established in the W3C (World Wide Web Consortium) for the purpose of providing interoperability between the ontology, and provides the standard mechanism for the definition and storage of the ontology and the switching. In particular, it is able to easily access through Web by using the extensible markup language (hereinafter, referred to as 'XML') syntax with a format for storage and exchange of the ontology, and to provide the standard data format to the information exchange between different systems.

Particularly, a development of IT (Information Technology) industry provides the information and the service through a computer and an internet, however, a massive amount of those is increasing the time and effort required to use by selecting the information and the service that user is needed. Accordingly, the computer make it to understand the terms of web document, so that the study for the intelligent web that is semantic web method that makes the computer to directly operate by the job selecting the information and service that the user is needed, has been actively proceeded. The ontology should be established for the semantic web method, and the ontology can make the computer intelligent, so that it can be used in the various fields for the intelligent service as well as the semantic web method.

The thesaurus using the glossary for information research doesn't need the identifying system, as it uses by setting the special items that represents an equivalent word, an antonym, a synonym, a hypernym, a hyponym, a relevant word, and the like to the each terms, however the ontology can be considered as a kind of network consisting of the concepts not being the terms and their relationships, in it the concepts related to the specific domain is not hierarchically limited and is expressed in the various constitution or the form, thus the identifying system is necessarily needed, and the inference rule supported in order to additionally expands the ontology, so it makes to possible to processing of the knowledge based on the web or sharing the knowledge between application program, reuse, and the like. That is, one of the main differences between the ontology and vocabulary semantic network, thesaurus, and the like is an identifying system.

Meanwhile, RDF is the way that is actively studied regarding the semantic web method, and the study on the XML/RDF content lifecycle management for managing the web contents being expressed by the existing extensible markup language (XML), and the RDF meta information that is coded to the web contents, has been actively proceeded.

The Semantic Web technology implies a next generation intellectual web that allows computers to understand information sources and even logically infer. The web is not a web where people search, see, and understand desired information with a keyboard or a mouse, such as the computer at the present time, but a web that computers can understand. That is, it is an intellectual web that is established by a new language that computers can understand such that machines can communicate with each other, not the existing web that is designed for people to conveniently read and comprehend.

The principle the Semantic Web is to change the meanings connected between information resources into a language having a formation that computers can understand, unlike web documents that are designed by natural language for people to understand. Accordingly, computers can understand the meanings of the information resources and machines can do necessary works while communicating information with each other.

A study about the Semantic Web has been conducted mainly with the ontology technology based on RDF and a Topic Map technology of ISO (International Organization for Standardization). The ontology technology based on RDF is a technology that makes it possible to understand the meaning of information and process the information by giving meta data, which is a language describing resources, such as subjects S, predicates P, and objects, to the web. The Topic Map is a technology supporting distribution management of information and knowledge, using XTM (XTML Topic Maps) language, which is a standard technological language based on XML of ISO, and has a double structure of a knowledge layer and an information layer. As the Semantic Web is implemented, computers can automatically process information, thereby maximizing productivity and efficiency of information systems.

### [Disclosure]

### [Technical Problem]

In consideration of the circumstances described above, it is an object of the present invention to provide question-answer service system and method based on RDF search that can provide question-answer service for an object O having the same P and subject S or a subject S having the same predicate P and object O, on the basis of an RDF network that is formed by extracting a subject S, a predicate P, and an object O, which are units forming an RDF model from a text document including nonstructural statement not having the structural form, and identifying the entity, depending on whether it is semantically same entity among the each entities.

### [Technical Solution]

In order to achieve the object, a question-answer service method based on RDF search according to the presenting invention includes: (a) extracting a subject, a predicate, and an object from a text document composed of the unstructured sentences not having the structured format; (b) creating RDF models composed of the extracted one subject, one predicate, and one object;(d) receiving a question including the subject S, the predicate P, or the object O from a user and being requested to search, on the basis of the constructed RDF network; (e) creating a question for search by interpreting the input question; (f) searching an RDF model matching with the question for search through the RDF network; and (g) providing a subject S, a predicate P, or an object O, which corresponds to an answer for the question from the searched RDF model.

In this configuration, the step (a) extracts the subject, the predicate, and the object by matching an extract pattern according to the context of the unstructured sentences with sentences or phrases of the text document.

Further, the step (a) performs character string normalization on the extracted subject, predicate, and object.

Further, the step (b) creates an identifying system-based RDF model by coding the subject the predicate, and the object with unique identifiers.

Further, the step (d) integrates the RDF models, when determining that two entities are the same in the RDF models.

Further, the step (e) creates a question for search having a type of 'subject(s)-predicate(p)-object(O)' including a variable, by interpreting the question.

Further, the step (f) searches an RDF model through the RDF network in accordance with the subject S, the predicate P, or the object O, which corresponds to the variable in the question for search.

On the other hand, in order to achieve the object, a question-answer service system based on RDF search according to the present invention, includes: an element extracting unit that extracts elements, which are a subject, a predicate, and an object, from a text document composed of the unstructured sentences not having the structural format; an element storage that stores the extracted subject S, predicate P, and object O; an identifier coder coding the unique identifier to the extracted subject, predicate, object; an RDF constructing unit that creates one RDF model by using the extracted one subject S, predicate P, and object O, and constructs an RDF network on the basis of the created RDF model; a question-answer service unit that searches and provides a subject S, a predicate P, or an object which corresponds to an answer for a question inputted from a user, on the basis of the RDF network; and a controller that separates the created RDF models when there is semantic collision and integrates the RDF models when there is not semantic collision by determining whether there is collision among the RDF models such that the RDF network is constructed, creates a question for search by interpreting the input question, and provides an object O, a predicate P, or a subject S which corresponds to an answer for the question from the RDF model searched through the RDF network.

Further, the element extracting unit extracts the subject S, the predicate P, and the object O by matching an extract pattern according to the context of the unstructured sentences with the sentences or phrases of the text document.

Further, the RDF constructing unit creates an identifying system-based RDF model by coding the subject or the object with a unique identifier.

Further, the controller integrates RDF models if it is determined that two entities are the same in the RDF models, when constructing the RDF network.

Further, the controller performs character string normalization on the subject S, the predicate P, and the object O, which are extracted by the element extracting unit.

Further, the controller creates a question for search in a type of 'subject(S)-predicate(P)-object(O)' including a variable, from the question, and searches an RDF model matching with the question for search and then provides a subject S, a predicate P, or an object O which corresponds to an answer for the question from the searched RDF model.

### [Advantageous Effects]

According to the present invention, it is possible to construct an RDF model and an RDF network by extracting a subject S, a predicate P, and an object O from a text document composed on unstructured sentences not having a structure format, and it is also possible to implement a question-answer search service that searches an object having the same predicate and subject or a subject having the same predicate and object, and provides related information.

### [Description of Drawings]

FIG. 1 is a diagram schematically illustrating the configuration of a question-answer service system based on RDF search according to an embodiment of the present invention;
FIG. 2 is an operational flowchart illustrating a question-answer service method based on RDF search according to an embodiment of the present invention;
FIG. 3 is a diagram illustrating an example of a process of establishing an RDF network according to an embodiment of the present invention;
FIG. 4 is a diagram illustrating an example of question-answer service based on RDF search according to an embodiment of the present invention; and
FIG. 5 is a diagram illustrating another example of question-answer service based on RDF search according to an embodiment of the present invention.

### [Best Mode]

The above and other objects, features and advantages of the present invention will become apparent from the following description of preferred embodiments given in conjunction with the accompanying drawings. Hereinafter, the embodiment according to the present invention will be described in more detail with reference to the accompanying drawings.

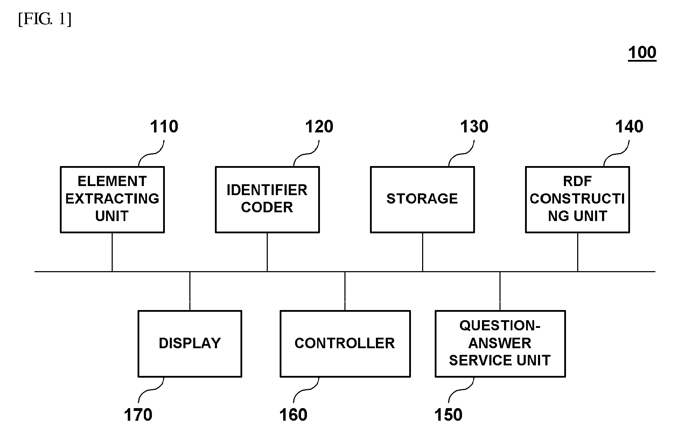

FIG. 1 is a diagram schematically illustrating the configuration of a question-answer service system based on RDF search according to an embodiment of the present invention.

Referring to FIG. 1, a question-answer service system 100 based on RDF search according to the present invention includes an element extracting unit 110, an identifier coder 120, a storage 130, a RDF construction unit 140, a question-answer service unit 150, a controller 160, and a controller 170.

The element extracting unit 110 extracts components, such as a subject, a predicate, and an object, from a text document including nonstructural statement not having the structural form

Further, the element extracting unit 110 extrudes the subject S, the predicate P, and the object O by matching the pattern of the extrusion according to the context of the unstructured statement with the statement or phrase of the text document.

The identifier coder 120 codes the extracted subject S, the predicate P, and the object O with unique identifiers.

The storage 130 stores the extracted subject S, predicate P, and object O, and stores an RDF model or an RDF network created by the RDF construction unit 140.

The RDF constructing unit 140 creates one RDF model by using extracted one subject, one predicate, and one object, or constructs an RDF network on the basis on the created RDF model.

In this process, the RDF constructing unit 140 creates an identifying system-based RDF model by coding the subject or the objects with unique identifiers.

The question-answer service unit 150 searches and provides a subject S, a predicate P, or an object O corresponding to an answer for a question inputted from a user, on the basis of the RDF network.

The controller 160 determines whether there is semantic collision in the created RDF models, separates them when there is collision or integrates them when there is no collision such that the RDF network is constructed. Further, the controller creates a question for search by interpreting the input question, searches an RDF model matched with the question for search from the RDF network, and provides a subject S, a predicate P, or an object O which corresponds to an answer for the question from the RDF model searched from the RDF network.

Further, the controller 160 integrates the RDF model, if it is determined that two individuals are the same individuals, when constructing the RDF network.

Further, the controller 160 performs character string normalization on the subject S, predicate P, and object O that are extracted by the element extracting unit 110, and then creates an RDF model.

Further, the controller 160 creates a question for search including variables by converting the input question to have a subject S-predicate-object O format, and searches an RDF model having an object O having the same predicate P and subject S or an RDF model having a subject S having the same predicate P and object O from the RDF network in accordance with the subject S, predicate P, or object O which corresponds to the question for search, and then provides a subject S, a predicate P, or an object O which corresponds to an answer for the question from the searched RDF model.

The display 170 displays the operational state of the device, or displays an image for inputting a question, an image for providing an answer for the question, and an image showing the configuration of the RDF model or the RDF network on the screen.

### [Mode for Invention]

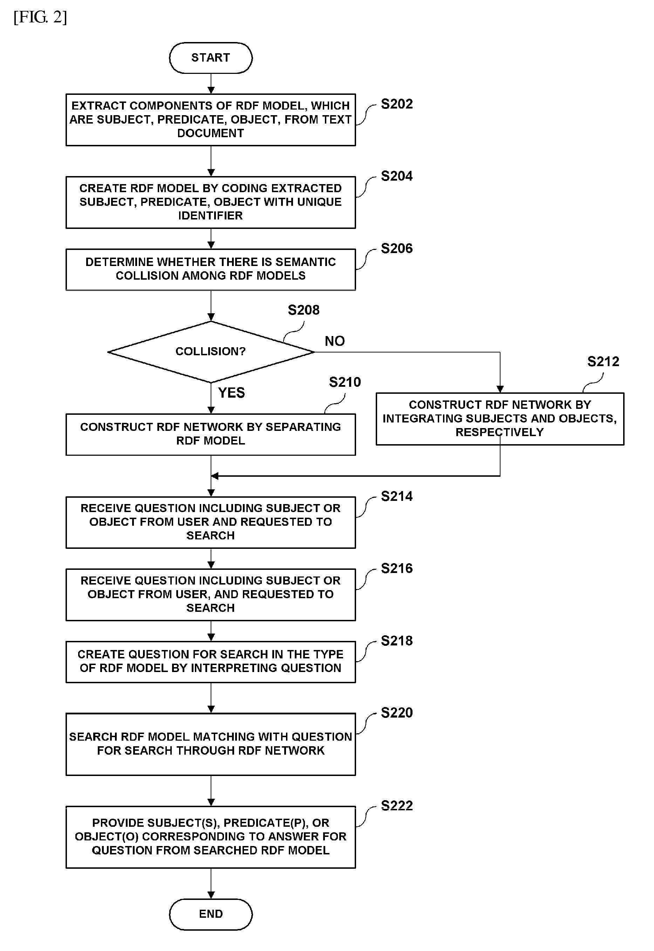

FIG. 2 is an operational flowchart illustrating a question-answer service method based on RDF search according to an embodiment of the present invention.

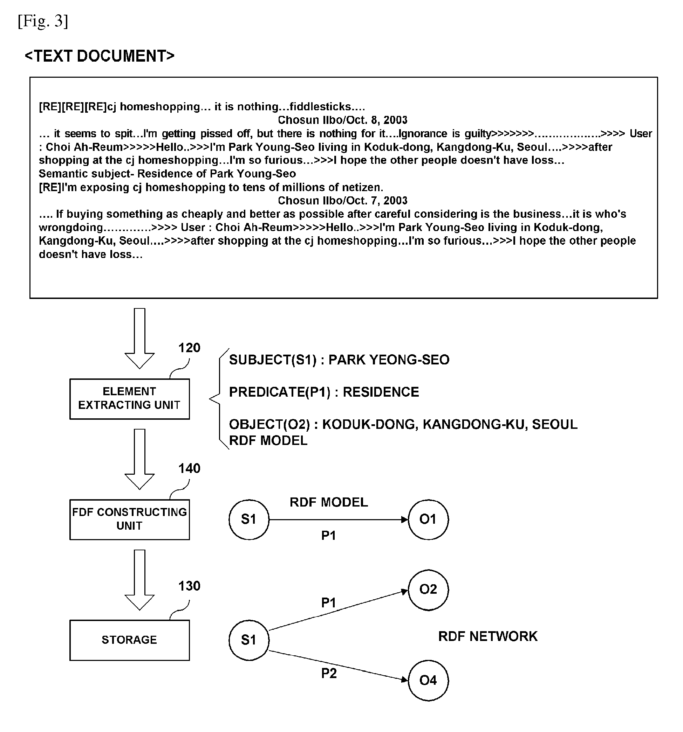

Referring to FIG. 2, the question-answer service system 100 based on RDF search according to the present invention extracts the component of the RDF model, such as a subject, a predicate, and an object, from a text document composed of unstructured sentences not having the structured format, as shown in FIG. 3 (S202).

In this process, the question-answer service system 100 based on RDF search extracts the subject, the predicate, and the object by matching an extract pattern according to the context of the unstructured sentences (for example, %people %living in %address) with the sentences or phrases of the text document. That is, as shown in FIG. 3, for example 'Park Young-Seo' is extracted as the subject S1, 'residence' is extracted as the predicate P1, and 'Koduk-dong, Kangdong-Ku, Seoul' is extracted as the object O1 by matching the extract pattern with the sentences or phrases of the text document.

Further, the question-answer service system 100 based on RDF search performs character string normalization on the extracted subject S, predicate P, and object O.

The question-answer service system 100 based on RDF search creates the RDF model by coding the extracted subject, predicate, and object with unique identifiers, because the recognition between the entities may be in confusion, when the extracted results are simply collected (S204).

Further, the question-answer service system 100 based on RDF search codes the subject S, predicate P, and object O with unique identifiers, for example, URI (Uniform Resource Identifier to construct the RDF model. Therefore, question-answer service system 100 based on RDF search creates an identifying system-based RDF model by coding the subject S, predicate P, and object O with unique identifiers, when creating an RDF model.

In the embodiment of the present invention, that constructing one subject S, one object and one predicate P is referred to as an 'RDF model', and that constructing the format that two or more objects are combined with one subject, as an example of combining two or more RDF models, is referred to as an 'RDF network'.

Then, the question-answer service system 100 based on RDF search determines whether there is semantic collision among the created RDF models (S206). That is, as shown in FIG. 3, the system determines whether there is semantic collision among S1, S2, S3,...,Sn, which are subjects S, among the RDF models, and determines whether there is semantic collision among O1, 02, 03,... which are objects.

Thereafter, the question-answer service system 100 based on RDF search constructs the RDF network (S210) by separating the created RDF models into different RDF models, when there is semantic collision among the created RDF models (YES in S208), and constructs the RDF network (S212) by integrating the subjects and objects, respectively, where there is no collision (NO in S208).

For example, when the subject S1 is 'Park Yeong-Seo', the subject S2 is 'Park Yeong-Seo', the predicate P1 is 'residence', the predicate P2 is 'residence', the object O1 is 'Koduk-dong, Kangdong-Ku, Seoul', and the object 02 is 'Koduk-dong, Kangdong-Ku, Seoul', there is no semantic collision, such that the controller 160 integrates S2 into S1 and 02 into O1 in the RDF constructing unit 140, thereby constructing the RDF model composed of S1-P1-O1. FIG. 3 is a diagram showing a process constructing the RDF network according to an embodiment of the present invention.

However, when the subject S1 is 'Park Yeong-Seo', the subject S3 is 'Park Yeong-Seo', the predicate P1 is 'residence', the predicate P3 is 'residence', the object 03 is 'Koduk-dong, Kangdong-Ku, Seoul', the object 03 is 'Gaepo-dong, Kangnam-Ku, Seoul', there is semantic collision; therefore, the controller 160 separates S1 from S3 and O1 from 03 in the RDF constructing unit 140 such that an RDF network composed of an RDF model composed of S1-P1-O1 and an RDF model composed of S3-P3-03 is constructed.

In this configuration, the question-answer service system 100 based on RDF search constructs the RDF network by integrating two entities, when determining that the entities are the same.

Thereafter, the question-answer service system 100 based on RDF search stores the constructed RDF network into the storage 130 (S214).

For example, the question-answer service system 100 based on RDF search can stores an RDF network of 'KIM Yu-Na (S1)-ideal type (P1)-YU Jae-Seok (O1)' and an RDF network of 'SHIN Min-Ah (S2)-ideal type (P2)-YU Jae-Seok (O2)' into the storage 130.

Thereafter, the question-answer service system 100 based on RDF search receives a question including a subject S, a predicate P, or an object O from a user through the RDF network, and is requested to search (S216).

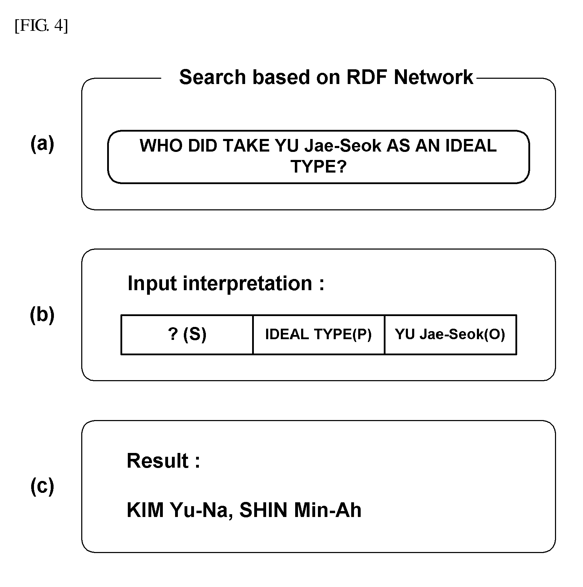

For example, the question-answer service system 100 based on RDF search, as shown in (a) of FIG. 4, may receive a question, "who did take YU Jae-Seok as an ideal type?" from the user and is requested to search. FIG. 4 is a diagram showing an example of question-answer service based on RDF search according to an embodiment of the present invention.

Thereafter, the question-answer service system 100 based on RDF search interprets the input question and creates a question for search in the type of RDF model including variables, such as a subject S, a predicate P, and an object O (S218).

For example, the question-answer service system 100 based on RDF search interprets the question, 'who did take Yu Jae-Seok as an ideal type?', and then creates a question for search in the type of 'subject(?)-predicate(ideal type)-object(YU Jae-Seok)' including variables, as shown in (b) of FIG. 4, by extracting 'YU Jae-Seok' as the object O and 'ideal type' as the predicate P.

Thereafter, the question-answer service system 100 based on RDF search searches an RDF model having a predicate P and a subject S or a predicate P and an object O, which are the same as those in the question for search having the RDF model type including variables, through the RDF network (S220).

That is, the question-answer service system 100 based on RDF search searches an RDF model having 'YU Jae-Seok' as an object) and 'ideal type' as a predicate P included in the question for search through the RDF network, and acquires RDF models matching with the question for search, for example, an RDF model of 'KIM Yu-Na (S1)-ideal type (P1)-YU Jae-Seok (O1)' and an RDF network of 'SHIN Min-Ah (S2)-ideal type (P2)-YU Jae-Seok (02)'.

Thereafter, the question-answer service system 100 based on RDF search provides the subject S, predicate P, or object O which corresponds to the answer for the question from the searched RDF models (S222).

For example, the question-answer service system 100 based on RDF search provides 'KIM Yu-Na(S1)' and 'SHIN Min-Ah(S2) which are subjects S having 'YU Jae-Seok' as the object O, 'ideal type' as the predicate P, as an answer for the question, from the RDF models of 'KIM Yu-Na (S1)-ideal type (P1)-YU Jae-Seok (O1)' and 'SHIN Min-Ah (S2)-ideal type (P2)-YU Jae-Seok (02)'.

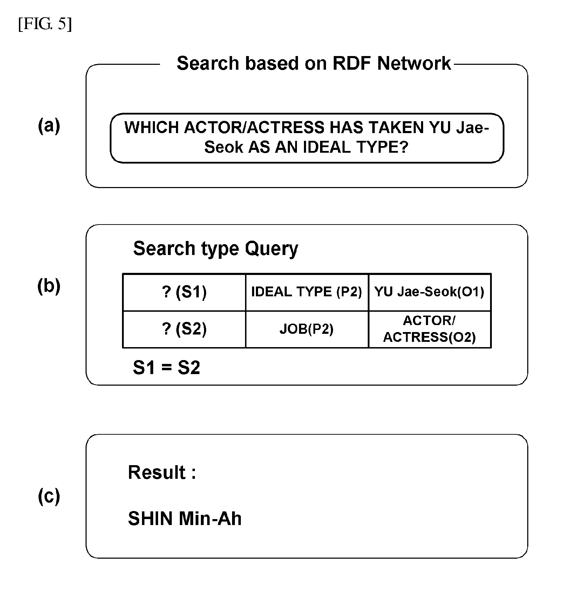

On the other hand, when receiving a question 'which actor/actress has taken YU Jae-Seok as an ideal type', for example, as shown in (a) of FIG. 5, the question-answer service system 100 based on RDF search interprets the input question, and then creates questions for search in the types of 'subject(?)-predicate(ideal type)-object(YU Jae-Seok)' including a variable and `subject(?)-predicate(job)-object(actor/actress)' including a variable by extracting 'YU Jae-Seok' as an object O1 and 'ideal type' as a predicate P2. FIG. 5 is a diagram showing another example of the question-answer service based on RDF search according to an embodiment of the present invention.

Thereafter, the question-answer service system 100 based on RDF search searches an RDF model having 'YU Jae-Seok' as an object O and 'ideal type' as a predicate P which are included in the question for search through the RDF network, and acquires, for example, an RDF model of 'SHIN Min-Ah(S1)-ideal type(P1)-YU Jae-Seok(O1)' and an RDF model of 'SHIN Min-Ah(S2)-job(S2)-actor/actress(O2)'.

Thereafter, the question-answer service system 100 based on RDF search provides 'SHIN Min-Ah', which is a subject S (S1=S2) which has 'YU Jae-Seok' and 'actor/actress' as objects O, as shown in (c) of FIG. 5, from the RDF models of 'SHIN Min-Ah(S1)-ideal type (P1)-YU Jae-Seok (O1)' and 'SHIN Min-Ah(S2)-ideal type (P2)-YU Jae-Seok (02)'.

Further, when receiving a question 'How is SHIN Min-Ah related to YU Jae-Seok?' the question-answer service system 100 based on RDF search interprets the question and creates a question for search in the type of 'SHIN Min-Ah(S)-?(P)-YU Jae-Seok(O)' including a variable, and searches an RDF model matching with the question for search through the RDF network and can provide a predicate P 'ideal type' as an answer for the question on the basis of the searched RDF.

In this configuration, the question-answer service system 100 based on RDF search should extract the question type, including 'who', 'where', and 'when', for example, and appropriates subject s, predicate P, and object O from the question, and uses a semantic web question, which is called SPARQL (SPARQL Protocol and RDF Query Language) in order to access the storage 130 storing the RDF network.

According to the present invention described above, it is possible to implement question-answer service system and method based on RDF search that can provide question-answer service for an object O having the same predicate P and subject S or a subject S having the same predicate P and object O, on the basis of an RDF network that is formed by extracting a subject S, a predicate P, and an object O, which are units forming an RDF model from a text document including nonstructural statement not having the structural form, and identifying the entity, depending on whether it is semantically same entity among the each entities.

While the present invention has been described in connection with certain exemplary embodiments, it is to be understood that the invention is not limited to the disclosed embodiments, but, on the contrary, is intended to cover various modifications and equivalent arrangements included within the spirit and scope of the appended claims, and-equivalents thereof.

### [Industrial Applicability]

The present invention can be applied to a system or service that implements ontology by extracting an RDF model from a text document.

Further, the present invention can be applied to a system or service providing a semantic web service or a search service.

Further, the present invention can be applied to a system or service receiving a question and providing an answer for the question, on the basis of an RDF network.

## Claims

1. A question-answer service method based on RDF (Resource Description Framework) search, comprising:
(a) extracting a subject, a predicate, and an object from a text document composed of the unstructured sentences not having the structured format;
(b) creating RDF models composed of the extracted one subject, one predicate, and one object;
(c) constructing an RDF network by separating the RDF models when there is semantic collision in the RDF models, and integrating the RDF models when there is no semantic collision, after comparing the RDF models;
(d) receiving a question including the subject S, the predicate P, or the object O from a user and being requested to search, on the basis of the constructed RDF network;
(e) creating a question for search by interpreting the input question;
(f) searching an RDF model matching with the question for search through the RDF network; and
(g) providing a subject S, a predicate P, or an object O, which corresponds to an answer for the question from the searched RDF model.

2. The question-answer service method based on RDF search according to claim 1, wherein the step (a) extracts the subject, the predicate, and the object by matching an extract pattern according to the context of the unstructured sentences with sentences or phrases of the text document.

3. The question-answer service method based on RDF search according to claim 1, wherein the step (a) performs character string normalization on the extracted subject, predicate, and object.

4. The question-answer service method based on RDF search according to claim 1, wherein the step (b) creates an identifying system-based RDF model by coding the subject the predicate, and the object with unique identifiers.

5. The question-answer service method based on RDF search according to claim 1, wherein the step (c) integrates the RDF models, when determining that two entities are the same in the RDF models.

6. The question-answer service method based on RDF search according to claim 1, wherein the step (e) creates a question for search having a type of 'subject(s)-predicate(p)-object(O)' including a variable, by interpreting the question.

7. The question-answer service method based on RDF search according to claim 1, wherein the step (f) searches an RDF model through the RDF network in accordance with the subject S, the predicate P, or the object O, which corresponds to the variable in the question for search.

8. A question-answer service system based on RDF search, comprising:
an element extracting unit that extracts elements, which are a subject, a predicate, and an object, from a text document composed of the unstructured sentences not having the structural format;
an identifier coder coding the unique identifier to the extracted subject, predicate, object;
an RDF constructing unit that creates one RDF model by using the extracted one subject S, predicate P, and object O, and constructs an RDF network on the basis of the created RDF model;
a question-answer service unit that searches and provides a subject S, a predicate P, or an object which corresponds to an answer for a question inputted from a user, on the basis of the RDF network; and
a controller that separates the created RDF models when there is semantic collision and integrates the RDF models when there is not semantic collision by determining whether there is semantic collision among the RDF models such that the RDF network is constructed, creates a question for search by interpreting the input question, and provides an object O, a predicate P, or a subject S which corresponds to an answer for the question from the RDF model searched through the RDF network.

9. The question-answer service system based on RDF search according to claim 8, wherein the element extracting unit extracts the subject, the predicate, and the object by matching an extract pattern according to the context of the unstructured sentences with the sentences or phrases of the text document.

10. The question-answer service system based on RDF search according to claim 8, wherein the RDF constructing unit creates an identifying system-based RDF model by coding the subject or the object with a unique identifier.

11. The question-answer service system based on RDF search according to claim 8, wherein the controller integrates RDF models if it is determined that two entities are the same in the RDF models, when constructing the RDF network.

12. The question-answer service system based on RDF search according to claim 8, wherein the controller performs character string normalization on the subject S, the predicate P, and the object O, which are extracted by the element extracting unit.

13. The question-answer service system based on RDF search according to claim 8, wherein the controller creates a question for search in a type of 'subject(S)-predicate(P)-object(O)' including a variable, from the question, and
searches an RDF model matching with the question for search and then provides an subject S, a predicate P, or an object O which corresponds to an answer for the question from the searched RDF model.
